# EUROPÄISCHE PATENTSCHRIFT

(11) **EP 3 679 431 B1**
(45) Veröffentlichungstag und Bekanntmachung des Hinweises auf die Patenterteilung: **20.04.2022**
(21) Anmeldenummer: 18753396.3
(22) Anmeldetag: 09.08.2018
(51) Int. Cl.: G05B 19/042

(54) **VERFAHREN ZUM BETREIBEN EINES ANWENDUNGSPROGRAMMS ZUM AUSFÜHREN AUF EINEM ELEKTRISCHEN STEUERGERÄT FÜR EIN ANTRIEBSSYSTEM, ELEKTRISCHES STEUERGERÄT, ANTRIEBSSYSTEM UND SYSTEM**
METHOD FOR OPERATING AN APPLICATION PROGRAM FOR EXECUTING IN AN ELECTRIC CONTROL UNIT FOR A DRIVE SYSTEM, ELECTRIC CONTROL UNIT, DRIVE SYSTEM AND SYSTEM
PROCÉDÉ POUR FAIRE FONCTIONNER UN PROGRAMME D'APPLICATION À EXÉCUTER SUR UN APPAREIL DE COMMANDE ÉLECTRIQUE POUR UN SYSTÈME D'ENTRAÎNEMENT, APPAREIL DE COMMANDE ÉLECTRIQUE, SYSTÈME D'ENTRAÎNEMENT ET SYSTÈME

(30) Priorität: 04.09.2017 DE 102017215449
(43) Veröffentlichungstag der Anmeldung: 15.07.2020
(73) Patentinhaber: Lenze Automation GmbH, 31855 Aerzen (DE)
(72) Erfinder: ZANG, Eduard, 31157 Sarstedt (DE); STÖWER, Mathias, 30880 Laatzen (DE); MITTELSTÄDT, Jan, 30457 Hannover (DE); KLING, Maikel, 5374 GX Schaijk (NL)
(74) Vertreter: Patentanwälte Ruff, Wilhelm, Beier, Dauster & Partner mbB
(86) Internationale Anmeldenummer: PCT/EP2018/071670
(87) Internationale Veröffentlichungsnummer: WO 2019/042736

(56) Entgegenhaltungen:
- EP-A2- 2 648 056
- DE-A1-102005 032 075
- DE-U1- 29 518 646

## Beschreibung

### Anwendungsgebiet und Stand der Technik

Die Erfindung bezieht sich auf ein Verfahren zum Betreiben eines Anwendungsprogramms zum Ausführen auf einem elektrischen Steuergerät für ein Antriebssystem, ein elektrisches Steuergerät, ein Antriebssystem mit einem solchen elektrischen Steuergerät und ein System mit einem solchen elektrischen Steuergerät und/oder einem solchen Antriebssystem.

Ein Verfahren zum Betreiben eines Anwendungsprogramms zum Ausführen auf einem elektrischen Steuergerät für ein Antriebssystem, ein elektrisches Steuergerät, ein Antriebssystem mit einem elektrischen Steuergerät und ein System mit einem elektrischen Steuergerät und/oder einem Antriebssystem sind bekannt.

Aus der EP 2 648 056 A2 ist bekannt, dass bei einem Verfahren zum Betreiben eines elektrischen Antriebssystems bei einem Hochfahren des elektrischen Antriebssystems automatisiert folgende Schritte durchgeführt werden: Einstellen von Betriebsparameterwerten auf Betriebsparameterwerkseinstellungswerte in einem Steuergerät und anschließend mittels eines Verwaltungsgeräts Laden mindestens solcher anwendungsspezifischer Betriebsparameterwerte in das Steuergerät, die von den Betriebsparameterwerkseinstellungswerten abweichen, wobei im Steuergerät die entsprechenden Betriebsparameterwerte auf die geladenen anwendungsspezifischen Betriebsparameterwerte eingestellt werden, wobei zur persistenten Einstellung von Betriebsparameterwerten folgende Schritte durchgeführt werden: mittels des Betriebsgeräts Verändern mindestens eines Betriebsparameterwertes in dem Steuergerät mittels des Bediengeräts ansteuern des Verwaltungsgeräts derart, dass dieses die in dem Steuergerät aktuell eingestellten Betriebsparameterwerte ausliest und als die anwendungsspezifischen Betriebsparameterwerte für das Steuergerät speichert.

Aus der DE 10 2005 032 075 A1 ist bekannt, dass eine Inbetriebnahme eines elektromaschinellen Arbeitsregler-Systems aus zumindest einer Maschine und zumindest einer Maschinensteuerung vereinfacht werden soll. Sie soll so von statten gehen können, dass in einem Servicefall ein schneller und sicherer Gerätetausch möglich wird. Vorgeschlagen werden Verfahren zur Inbetriebnahme als erste oder erneute Inbetriebnahme. Ein Boot-Speicherbereich zur Speicherung von maschinenbezogenen Daten ist vorgesehen, welcher zumindest jeweils mehrere erste Parameter für mehrere Regler und mehrere anwendungsspezifische zweite Parameter des Antriebsreglersystems umfassen. Die mehreren ersten und zweiten Parameter sind in dem Boot-Speicherbereich dauerhaft gespeichert, welcher Speicherbereich auf einem Modul organisiert ist, das aus der Maschinensteuerung absteckbar und wieder einsteckbar ist. Eine Übertragung aller maschinenbezogenen Daten erfolgt vom Boot-Speicherbereich des Moduls zu der Maschinensteuerung.

Aus der DE 295 18 646 U1 ist ein Antrieb für eine elektrische Tür bekannt.

### Aufgabe und Lösung

Der Erfindung liegt als Aufgabe die Bereitstellung eines Verfahrens zum Betreiben eines Anwendungsprogramms zum Ausführen auf einem elektrischen Steuergerät für ein Antriebssystem zugrunde, das ein Betreiben des Anwendungsprogramms erleichtert. Des Weiteren liegt der Erfindung als Aufgabe die Bereitstellung eines elektrischen Steuergeräts, eines Antriebssystems mit einem solchen elektrischen Steuergerät und eines Systems mit einem solchen elektrischen Steuergerät und/oder einem solchen Antriebssystem zugrunde.

Die Erfindung löst diese Aufgabe durch die Bereitstellung eines Verfahrens mit den Merkmalen des Anspruchs 1. Des Weiteren wird die der Erfindung zugrundeliegende Aufgabe durch ein elektrisches Steuergerät mit den Merkmalen des Anspruchs 5, ein Antriebssystem mit den Merkmalen des Anspruchs 6 und ein System mit den Merkmalen des Anspruchs 7 gelöst. Vorteilhafte Weiterbildungen und/oder Ausgestaltungen der Erfindung sind in den abhängigen Ansprüchen beschrieben.

Das erfindungsgemäße, insbesondere automatische, Verfahren zum Betreiben eines Anwendungsprogramms zum Ausführen auf einem elektrischen Steuergerät für ein, insbesondere elektrisches, Antriebssystem weist den Schritt auf: Verwalten, insbesondere automatisches Verwalten, mindestens eines Anwendungsparameters, insbesondere einer Mehrzahl von Anwendungsparametern, mittels eines Anwendungsparameterverwalters. Das Anwendungsprogramm läuft auf einer Firmware auf dem elektrischen Steuergerät. Der Anwendungsparameter ist ein Parameter des Anwendungsprogramms.

Das Anwendungsprogramm kann als Anwendungssoftware, Applikation, insbesondere Kundenapplikation, oder Steuerprogramm bezeichnet werden. Das Anwendungsprogramm kann anwendungsspezifisch oder anwendungsindividualisiert oder kundenspezifisch sein. Insbesondere kann das Anwendungsprogramm ein SPS-basiertes Programm sein (SPS: Speicherprogrammierbare Steuerung).

Außerdem kann das Anwendungsprogramm auf oder in dem elektrischen Steuergerät, insbesondere auf einem Wechselspeichermedium wie einer SD-Karte in dem Steuergerät, vorhanden oder gespeichert sein.

Das elektrische Steuergerät kann zum Ausführen, insbesondere zum automatischen Ausführen, des Anwendungsprogramms ausgebildet sein. Insbesondere kann das elektrische Steuergerät einen Mikroprozessor und/oder ein Field Programmable Gate Array (FPGA) zum Ausführen des Anwendungsprogramms aufweisen.

Weiter kann das elektrische Steuergerät Bestandteil des Antriebssystems sein. Zusätzlich oder alternativ kann das Antriebsystem Bestandteil einer Anlage sein, insbesondere einer Produktionsanlage.

Der Anwendungsparameter kann einen einstellbaren Anwendungsparameterwert aufweisen. Das Verwalten kann ein Einstellen und ein Speichern des eingestellten Anwendungsparameterwerts aufweisen. Das Verwalten kann wiederholt werden, insbesondere mehrfach. Insbesondere kann eine Anwendungsparameterdatei den mindestens einen Anwendungsparameter aufweisen, wobei der Inhalt der Anwendungsparameterdatei vom Anwendungsprogramm zum Ausführungszeitpunkt, gegebenenfalls bei Programmstart, interpretiert werden kann. Der Anwendungsparameter kann als anwendungsspezifischer Parameter bezeichnet werden.

Der Anwendungsparameterverwalter kann mindestens einen Parameter des Anwendungsprogramms aufweisen oder beinhalten oder darauf zugreifen. Anders formuliert: der Anwendungsparameterverwalter kann mit dem Anwendungsprogramm kommunizieren. Beispielsweise kann der Anwendungsparameter ein Grenzwert, ein Sollwert für eine Bahngeschwindigkeit, ein Sollwert für eine Beschleunigung, eine Temperatur, eine Bahnlänge, etc. sein für eine Anwendung wie eine Wickler-Anwendung oder eine Tabellenpositionierung-Anwendung oder eine Regalbediengerät-Anwendung.

Der Anwendungsparameterverwalter kann dazu ausgebildet oder konfiguriert sein, den mindestens einen Anwendungsparameter zu verwalten. Beispielsweise kann der Anwendungsparameterverwalter den Anwendungsparameter überprüfen, beispielsweise auf Einhaltung eines Grenzwerts. Insbesondere kann der Anwendungsparameterverwalter dazu ausgebildet oder konfiguriert sein, eine Verbindung zwischen dem mindestens einen Anwendungsparameter und mindestens einer Variablen des Anwendungsprogramms herzustellen. In anderen Worten: Der Anwendungsparameterverwalter kann eine Zuordnung, insbesondere eine Adressierung, zwischen dem mindestens einen Anwendungsparameter und mindestens einer Variablen des Anwendungsprogramms kennen beziehungsweise die Zuordnung kann in dem Anwendungsparameterverwalter hinterlegt sein. Der Anwendungsparameterverwalter kann als Anwendungsparametermanager bezeichnet werden.

Zudem kann der Anwendungsparameterverwalter dazu ausgebildet sein, nur oder ausschließlich den mindestens einen Anwendungsparameter zu verwalten. Anders formuliert: der Anwendungsparameterverwalter braucht nicht zum Verwalten von mindestens einem Geräteparameter ausgebildet zu sein. Zusätzlich oder alternativ kann der Anwendungsparameterverwalter getrennt oder separat von einem Geräteparameterverwalter ausgebildet sein.

Der Anwendungsparameterverwalter ist nicht der Firmware auf dem elektrischen Steuergerät hinzugefügt. Insbesondere kann der Anwendungsparameterverwalter, wie das Anwendungsprogramm, auf der Firmware laufen beziehungsweise mittels dieser ausgeführt werden.

Das Verfahren ermöglicht, dass das Anwendungsprogramm von dem elektrischen Steuergerät unabhängig sein kann. Das elektrische Steuergerät braucht vor dem Betrieb des Anwendungsprogramms, insbesondere vor dem Verwalten des mindestens einen Anwendungsparameters, keinen Parameterverwalter, insbesondere keinen Anwendungsparameterverwalter aufzuweisen. Somit kann ein Betreiben des Anwendungsprogramms erleichtert sein.

Der Anwendungsparameterverwalter ist dem Anwendungsprogramm hinzugefügt. Anders formuliert: der Anwendungsparameterverwalter kann mit dem Anwendungsprogramm funktional fest verbunden sein. Das Anwendungsprogramm und der Anwendungsparameterverwalter können ein Paket bilden, insbesondere ein Datei-Paket. Insbesondere kann der Anwendungsparameterverwalter in das Anwendungsprogramm integriert sein beziehungsweise Bestandteil des Anwendungsprogramms sein. Das Anwendungsprogramm und der Anwendungsparameterverwalter können in einer Datei sein.

Dies ermöglicht, dass das Anwendungsprogramm von dem elektrischen Steuergerät unabhängig ist. Dies erleichtert ein Betreiben des Anwendungsprogramms auf dem elektrischen Steuergerät, insbesondere bei einer Portierung des Anwendungsprogramms, insbesondere mit dem mindestens einen Anwendungsparameter, von einem anderen elektrischen Steuergerät oder einer anderen Plattform auf das elektrische Steuergerät. Des Weiteren vereinfacht dies eine Simulation des Anwendungsprogramms, insbesondere mit dem mindestens einen Anwendungsparameter. Außerdem ermöglicht dies oder vereinfacht zumindest das Ausführen mindestens eines anderen Anwendungsprogramms neben oder parallel zu dem Ausführen des einen Anwendungsprogramms auf dem elektrischen Steuergerät. Beispielsweise ermöglicht dies, falls es doch einmal vorkommen sollte, dass zwei verschiedene Anwendungsprogramme ein und denselben Anwendungsparameter aufweisen, die beiden Anwendungsprogramme für den Anwendungsparameter verschiedene Grenzwerte aufweisen können. Andernfalls braucht dies nicht so zu sein. Es könnte nur ein Grenzwert ermöglicht sein.

Zuvor, insbesondere vor dem Betreiben, kann das Anwendungsprogramm erstellt werden oder worden sein, insbesondere mittels eines Verfahrens zum Erstellen des Anwendungsprogramms, wobei beim Erstellen des Anwendungsprogramms der Anwendungsparameterverwalter dem Anwendungsprogramm hinzugefügt werden oder sein kann.

Das Verfahren weist den Schritt auf: Verwalten, insbesondere automatisches Verwalten, mindestens eines Geräteparameters mittels eines Geräteparameterverwalters. Der Geräteparameterverwalter ist der Firmware auf dem elektrischen Steuergerät hinzugefügt. Der Geräteparameterverwalter ist in die Firmware integriert.

Firmware kann typischerweise Software sein, die in das elektrische Steuergerät eingebettet sein kann. Die Firmware kann beispielsweise in einem Flash-Speicher, einem EPROM, EEPROM oder ROM des elektrischen Steuergeräts gespeichert sein und durch einen Benutzer oder Anwender nicht oder nur mit speziellen Mitteln beziehungsweise Funktionen wechselbar oder austauschbar sein. Der Begriff Firmware rührt daher, dass die Firmware funktional fest (firm) mit der Hardware, insbesondere des elektrischen Steuergeräts, verbunden sein kann. Die Firmware kann typischerweise eine Zwischenstellung zwischen einer Hardware des elektrischen Steuergeräts und dem Anwendungsprogramm, welches gegebenenfalls relativ einfach wechselbar oder austauschbar sein kann, einnehmen.

Der Geräteparameter kann einen einstellbaren Geräteparameterwert aufweisen. Das Verwalten kann ein Einstellen und ein Speichern des eingestellten Geräteparameterwerts aufweisen. Das Verwalten kann wiederholt werden, insbesondere mehrfach. Das Verwalten des Geräteparameterwerts kann zeitgleich mit dem Verwalten des Anwendungsparameters und/oder zeitlich vor und/oder nach diesem ausgeführt werden. Insbesondere kann eine Geräteparameterdatei den mindestens einen Geräteparameter aufweisen. Die Geräteparameterdatei kann getrennt oder separat von der Anwendungsparameterdatei, soweit vorhanden, ausgebildet sein. Der Geräteparameter kann als gerätespezifischer Parameter bezeichnet werden. In anderen Worten: der Geräteparameterverwalter kann mindestens einen Parameter des elektrischen Steuergeräts und/oder des Antriebssystems, insbesondere des elektrischen Antriebssystems, beziehungsweise seiner Firmware aufweisen oder beinhalten. Zusätzlich kann das elektrische Steuergerät zum Steuern eines Aktors, insbesondere eines Elektromotors, des Antriebssystems ausgebildet sein und der Geräteparameterverwalter kann mindestens einen Parameter des Aktors aufweisen oder beinhalten. Beispielsweise kann der Geräteparameter eine Leistung, ein Maximalstrom, eine Nenndrehzahl des Elektromotors, soweit vorhanden, ein Feldbus-Parameter, wie ein Stationsname und/oder eine IO-Adresse, ein Geber-Parameter, wie eine Anzahl an Poolpaaren und/oder eine Versorgungsspannung, ein Sicherheits-Parameter etc. sein.

Der Geräteparameterverwalter kann dazu ausgebildet oder konfiguriert sein, den mindestens einen Geräteparameter zu verwalten. Insbesondere kann der Geräteparameterverwalter dazu ausgebildet sein, nur oder ausschließlich den mindestens einen Geräteparameter zu verwalten. Anders formuliert: der Geräteparameterverwalter braucht nicht zum Verwalten von dem mindestens einem Anwendungsparameter ausgebildet zu sein. Des Weiteren braucht der Geräteparameterverwalter dem Anwendungsprogramm nicht hinzugefügt zu sein. Außerdem kann der Geräteparameterverwalter als Geräteparametermanager bezeichnet werden.

Dies ermöglicht, den mindestens einen Geräteparameter unabhängig von dem mindestens einen Anwendungsparameter zu verwalten. Wenn der mindestens eine Geräteparameter einmal verwaltet ist, braucht dieser in der Regel nicht mehr verwaltet zu werden, es sei denn, dass es zu einer Hardware-Änderung kommt.

In einer Weiterbildung der Erfindung weist das Verfahren die Schritte auf: Definieren, insbesondere automatisches Definieren, des mindestens einen Anwendungsparameters mittels des Anwendungsprogramms. Zur Verfügung stellen, insbesondere automatisches zur Verfügung stellen, des mindestens einen definierten Anwendungsparameters an den Anwendungsparameterverwalter mittels eines Kontrollmoduls. Das Kontrollmodul ist dem Anwendungsprogramm hinzugefügt, insbesondere in das Anwendungsprogramm integriert. Dies ermöglicht das Verwalten des mindestens einen, insbesondere definierten, Anwendungsparameters mittels des Anwendungsparameterverwalters. Das Kontrollmodul kann dazu ausgebildet oder konfiguriert sein, dem Anwendungsparameterverwalter den mindestens einen definierten Anwendungsparameter zur Verfügung zu stellen. In anderen Worten: das Kontrollmodul kann ein definiertes Stück Programmcode sein, welches vorgegebene Funktionen für mindestens einen Teil des Antriebssystems definieren kann. Das Kontrollmodul kann als Software-Hülle bezeichnet werden.

Zuvor, insbesondere vor dem Betreiben, kann das Anwendungsprogramm erstellt werden oder worden sein, insbesondere mittels eines Verfahrens zum Erstellen des Anwendungsprogramms, wobei beim Erstellen des Anwendungsprogramms das Kontrollmodul dem Anwendungsprogramm hinzugefügt werden oder sein kann.

In einer Ausgestaltung der Erfindung weist das Verfahren den Schritt auf: Verteilen, insbesondere automatisches Verteilen, von Daten von außerhalb des elektrischen Steuergeräts betreffend den mindestens einen Anwendungsparameter oder den mindestens einen Geräteparameter mittels eines Parameterverwalterverteilers auf dem elektrischen Steuergerät. Der Parameterverwalterverteiler verteilt Daten betreffend den mindestens einen Geräteparameter an den Geräteparameterverwalter und verteilt Daten betreffend den mindestens einen Anwendungsparameter an den Anwendungsparameterverwalter.

Mittels der Daten kann auf den entsprechenden Parameter zugegriffen werden. Insbesondere können die Daten Anfragen über den Parameter oder ein, insbesondere einzustellender, Parameterwert sein. Der Schritt des Verteilens kann ein Teilschritt des Verwaltens sein.

Das elektrische Steuergerät kann eine oder mehrere Schnittstellen, wie einen Ethernet-Anschluss oder einen Feldbus-Anschluss, aufweisen, mittels welcher die Daten von außerhalb in das elektrische Steuergerät gelangen können, insbesondere zu seinem Parameterverwalterverteiler. Von dort können die Daten an den entsprechenden Verwalter weitergeleitet werden. Von außerhalb kann insbesondere von dem Benutzer bedeuten.

Der Parameterverwalterverteiler kann dazu ausgebildet oder konfiguriert sein, Daten betreffend den mindestens einen Geräteparameter an den Geräteparameterverwalter zu verteilen und Daten betreffend den mindestens einen Anwendungsparameter an den Anwendungsparameterverwalter zu verteilen. Insbesondere kann der Parameterverwalterverteiler alle Parameter des jeweiligen Verwalters und ihre Parameter, insbesondere Parameteradressen, kennen beziehungsweise dies kann in dem Parameterverwalterverteiler hinterlegt sein. Zumindest kann der Parameterverwalterverteiler den mindestens einen Geräteparameter kennen. Wenn Daten betreffend eines unbekannten Parameters zu dem Parameterverwalterverteiler gelangen, kann der Parameterverwalterverteiler davon ausgehen, dass die Daten den mindestens einen Anwendungsparameter betreffen müssen. Des Weiteren kann der Parameterverwalterverteiler der Firmware auf dem elektrischen Steuergerät hinzugefügt sein, insbesondere in die Firmware integriert sein. Außerdem kann der Parameterverwalterverteiler als Weiche bezeichnet werden.

In einer Weiterbildung der Erfindung ist das elektrische Steuergerät ein Frequenzumrichter, ein Servoumrichter, ein Motion Controller oder ein Visu-Controller. Typischerweise sind Motion Controller elektrische Steuergeräte zur Bewegungsregelung oder Bewegungssteuerung, mittels denen eine Pose, eine Geschwindigkeit, eine Beschleunigung oder einer Kombination daraus beeinflusst werden kann. Typische Anwendung ist beispielsweise die Punkt-zu-Punkt-Positionsregelung und die Drehzahlregelung. Typischerweise sind Visu-Controller elektrische Steuergeräte, welche zur IPC-Visualisierung ausgebildet sein können. Insbesondere kann das elektrische Steuergerät einen Umrichter mit integriertem Controller aufweisen oder sein. Dies kann als Drive-Based-System (DBA) bezeichnet werden, sofern der in den Umrichter integrierte Controller das Antriebssystem steuern kann oder steuert. Alternativ kann das elektrische Steuergerät einen Umrichter und einen vom Umrichter getrennten Controller aufweisen oder sein, wobei der Umrichter und der Controller miteinander koppelbar beziehungsweise gekoppelt sein können, beispielsweise mittels eines, insbesondere synchronisierten, Feldbus, wie EtherCAT. Dies kann als Controller-Based-System (CBA) bezeichnet werden.

Des Weiteren bezieht sich die Erfindung auf ein elektrisches Steuergerät für ein Antriebssystem. Das erfindungsgemäße elektrische Steuergerät weist das Anwendungsprogramm zum Ausführen auf dem elektrischen Steuergerät und den Anwendungsparameterverwalter auf, zumindest im Betrieb, insbesondere beim Ausführen des Anwendungsprogramms. Das elektrische Steuergerät ist zum Ausführen des Anwendungsprogramms ausgebildet. Der Anwendungsparameterverwalter ist dazu ausgebildet, den mindestens einen Anwendungsparameter zu verwalten. Das Anwendungsprogramm läuft auf einer Firmware auf dem elektrischen Steuergerät. Der Anwendungsparameter ist ein Parameter des Anwendungsprogramms. Der Anwendungsparameterverwalter ist dem Anwendungsprogramm hinzugefügt. Der Anwendungsparameterverwalter ist nicht der Firmware auf dem elektrischen Steuergerät hinzugefügt.

Das elektrische Steuergerät kann die gleichen Vorteile ermöglichen wie das zuvor beschriebene Verfahren. Insbesondere kann das elektrische Steuergerät teilweise oder sogar ganz ausgebildet sein, wie für das Verfahren zuvor beschrieben. Des Weiteren kann das elektrische Steuergerät zum Ausführen, insbesondere zum automatischen Ausführen, von Teilen des zuvor beschriebenen Verfahrens oder sogar des ganzen Verfahrens ausgebildet sein.

Das elektrische Steuergerät weist den Geräteparameterverwalter auf. Der Geräteparameterverwalter ist dazu ausgebildet, den mindestens einen Geräteparameter zu verwalten. Der Geräteparameterverwalter ist der Firmware auf dem elektrischen Steuergerät hinzugefügt. Der Geräteparameterverwalter ist in die Firmware integriert.

Außerdem bezieht sich die Erfindung auf ein, insbesondere elektrisches, Antriebssystem. Das erfindungsgemäße Antriebssystem weist einen Aktor, insbesondere einen Elektromotor, und das elektrische Steuergerät auf. Das elektrische Steuergerät ist zum Steuern, insbesondere zum automatischen Steuern, des Aktors ausgebildet.

Das Antriebssystem kann die gleichen Vorteile ermöglichen wie sein elektrisches Steuergerät. Insbesondere kann das Antriebssystem teilweise oder sogar ganz ausgebildet sein, wie für das Verfahren zuvor beschrieben.

Zusätzlich kann das Antriebssystem einen Sensor aufweisen. Dem Sensor kann/können das Steuergerät und zusätzlich der Aktor zugeordnet sein. Insbesondere kann das Steuergerät dazu ausgebildet sein, in Abhängigkeit eines Sensorsignals des Sensors den Aktor zu steuern.

Weiter bezieht sich die Erfindung auf ein, insbesondere elektrisches, System. Das erfindungsgemäße System weist das elektrische Steuergerät und/oder das Antriebssystem auf. Zusätzlich weist das System eine benutzerbetätigbare Bedieneinrichtung zum Verwalten des mindestens einen Anwendungsparameters und/oder des mindestens einen Geräteparameters, soweit vorhanden, durch den Benutzer auf.

Dies ermöglicht das Verwalten. Des Weiteren kann das System die gleichen Vorteile ermöglichen wie sein elektrisches Steuergerät und/oder sein Antriebssystem.

Insbesondere kann die benutzerbetätigbare Bedieneinrichtung eine Ausgabeeinrichtung, insbesondere eine Anzeige wie einen Bildschirm, zum Ausgeben, insbesondere zum Anzeigen, des mindestens einen Anwendungsparameters und/oder des mindestens einen Geräteparameters aufweisen. Des Weiteren kann die benutzerbetätigbare Bedieneinrichtung eine Einstelleinrichtung zum Einstellen des mindestens einen Anwendungsparameters und/oder des mindestens einen Geräteparameters aufweisen, insbesondere eine Eingabeeinrichtung wie eine Tastatur, eine Maus und/oder einen Touchscreen. Außerdem kann das elektrische Steuergerät und/oder das Antriebssystem die benutzerbetätigbare Bedieneinrichtung aufweisen. Zusätzlich oder alternativ kann die benutzerbetätigbare Bedieneinrichtung getrennt von dem elektrischen Steuergerät und/oder dem Antriebssystem ausgebildet sein und zur Datenverbindung, insbesondere zum Datenaustausch, mit diesen/m ausgebildet sein, insbesondere koppelbar.

Zudem bezieht sich die Erfindung auf eine, insbesondere elektrische, Vorrichtung. Die erfindungsgemäße Vorrichtung weist ein Erstellprogramm zum Erstellen des zuvor beschriebenen Anwendungsprogramms zum Ausführen auf dem zuvor beschriebenen elektrischen Steuergerät für das zuvor beschriebene Antriebssystem auf. Das erstellte Anwendungsprogramm kann dann wie zuvor beschrieben betrieben werden. Insbesondere kann das Erstellprogramm zum Anlegen von mindestens einem Anwendungsparameter in dem Anwendungsprogramm ausgebildet oder konfiguriert sein. Des Weiteren kann das Erstellprogramm zum Hinzufügen des Anwendungsparameterverwalters zu dem Anwendungsprogramm ausgebildet sein. Die Vorrichtung kann einen Computer, einen Server und/oder einen Datenträger aufweisen oder sein. Insbesondere kann die Vorrichtung zum Ausführen des Erstellprogramms ausgebildet sein.

### Kurzbeschreibung der Zeichnungen

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind. Dabei zeigt:

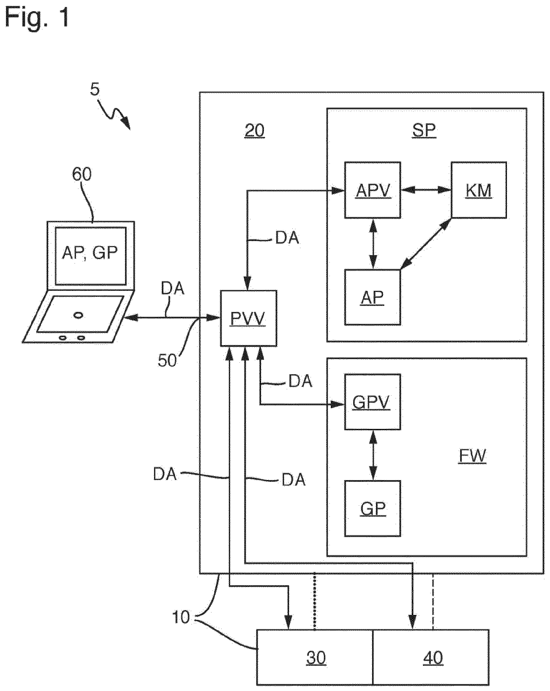

Fig. 1 ein erfindungsgemäßes System mit einem erfindungsgemäßen Antriebssystem mit einem erfindungsgemäßen elektrischen Steuergerät beim Ausführen eines erfindungsgemäßen Verfahrens.

### Detaillierte Beschreibung der Ausführungsbeispiele

Fig. 1 zeigt ein erfindungsgemäßes System 5. Das System 5 weist ein, insbesondere elektrisches, Antriebssystem 10 auf. Das Antriebssystem 10 weist ein erfindungsgemäßes elektrisches Steuergerät 20 und einen Aktor 30 in Form eines Elektromotors auf. Das Steuergerät 20 ist zum Steuern des Aktors 30 ausgebildet. Im Detail ist das Steuergerät 20 mit dem Aktor 30 elektrisch verbunden, wie in Fig. 1 durch eine gepunktete Linie angedeutet.

Im gezeigten Ausführungsbeispiel ist das elektrische Steuergerät 20 ein Frequenzumrichter. In alternativen Ausführungsbeispielen kann das Steuergerät ein Servoumrichter, ein Motion Controller oder ein Visu-Controller sein. Des Weiteren ist vorliegend ein DBA-System gezeigt. In alternativen Ausführungsbeispielen kann zusätzlich oder alternativ ein CBA-System vorliegen.

Zusätzlich weist das Antriebssystem 10 einen Sensor 40 auf. Dem Sensor 40 sind das elektrische Steuergerät 20 und zusätzlich der Aktor 30 zugeordnet. Das Steuergerät 20 ist dazu ausgebildet, in Abhängigkeit eines nicht dargestellten Sensorsignals des Sensors 40 den Aktor 30 zu steuern. Im Detail steht das Steuergerät 20 in Signalverbindung mit dem Sensor 40, wie in Fig. 1 durch eine gestrichelte Linie angedeutet.

In alternativen Ausführungsbeispielen kann das Antriebssystem mehr als das eine elektrische Steuergerät aufweisen, insbesondere mindestens zwei, insbesondere mindestens fünf, insbesondere mindestens zehn. Insbesondere kann das Steuergerät im Falle eines CBA-Systems einen Controller und nur einen einzigen oder mehr als einen Umrichter aufweisen, insbesondere mindestens zwei, insbesondere mindestens fünf, insbesondere mindestens zehn. Außerdem kann das Antriebssystem in alternativen Ausführungsbeispielen mehr als den einen Aktor aufweisen, insbesondere mindestens zwei, insbesondere mindestens fünf, insbesondere mindestens zehn. Weiter kann das Antriebssystem in alternativen Ausführungsbeispielen mehr als den einen Sensor aufweisen, insbesondere mindestens zwei, insbesondere mindestens fünf, insbesondere mindestens zehn. Dem Steuergerät kann mehr als der eine Aktor zugeordnet sein, beispielsweise für den Fall von so genannten Zwei- oder Mehrachsanwendungen. Zudem kann dem Steuergerät mehr als der eine Sensor zugeordnet sein.

Ein erfindungsgemäßes Verfahren zum Betreiben eines Anwendungsprogramms SP in Form eines SPS-basierten Programms zum Ausführen auf dem elektrischen Steuergerät 20 für das Antriebssystem 10 weist den Schritt auf: Verwalten mindestens eines Anwendungsparameters AP mittels eines Anwendungsparameterverwalters APV. Im Detail ist der Anwendungsparameterverwalter APV dazu ausgebildet, den mindestens einen Anwendungsparameter AP zu verwalten.

Das erfindungsgemäße elektrische Steuergerät 20 für das Antriebssystem 10 weist das Anwendungsprogramm SP zum Ausführen auf dem Steuergerät 20 und den Anwendungsparameterverwalter APV zum Verwalten des mindestens einen Anwendungsparameters AP auf. Im Detail ist das Steuergerät 20 zum Ausführen des Anwendungsprogramms SP zum Betreiben des Antriebssystems 10 ausgebildet. Des Weiteren ist das System 5 beziehungsweise sein Antriebssystem 10 beziehungsweise sein Steuergerät 20 zum Ausführen des Verfahrens ausgebildet.

Im gezeigten Ausführungsbeispiel weist das elektrische Steuergerät 20 das eine Anwendungsprogramm SP auf. In alternativen Ausführungsbeispielen kann das Steuergerät mehr als ein Anwendungsprogramm aufweisen, insbesondere mindestens zwei, insbesondere mindestens fünf, insbesondere mindestens zehn. Außerdem kann das Steuergerät zum Ausführen mehrerer, insbesondere verschiedener, Anwendungsprogramme, insbesondere mit verschiedenen und/oder mindestens teilweise demselben/denselben Anwendungsparameter/n, nebeneinander oder parallel ausgebildet sein.

Im Detail ist Anwendungsparameterverwalter APV dem Anwendungsprogramm SP hinzugefügt, insbesondere in das Anwendungsprogramm SP integriert. In alternativen Ausführungsbeispielen braucht der Anwendungsparameterverwalter dem Anwendungsprogramm nicht hinzugefügt zu sein.

Weiter weist das Verfahren den Schritt auf: Definieren des mindestens einen Anwendungsparameters AP mittels des Anwendungsprogramms SP. Zur Verfügung stellen des mindestens einen definierten Anwendungsparameters AP an den Anwendungsparameterverwalter APV mittels eines Kontrollmoduls KM. Das Kontrollmodul KM ist dem Anwendungsprogramm SP hinzugefügt, insbesondere in das Anwendungsprogramm SP integriert. Im Detail ist das Kontrollmodul KM dazu ausgebildet, dem Anwendungsparameterverwalter APV den mindestens einen definierten Anwendungsparameter AP zur Verfügung zu stellen.

Zudem weist das Verfahren den Schritt auf: Verwalten mindestens eines Geräteparameters GP mittels eines Geräteparameterverwalters GPV. Der Geräteparameterverwalter GPV ist einer Firmware FW auf dem elektrischen Steuergerät 20 hinzugefügt, insbesondere in die Firmware FW integriert. Im Detail ist der Geräteparameterverwalter GPV dazu ausgebildet, den mindestens einen Geräteparameter GP zu verwalten.

Das elektrische Steuergerät 20 weist den Geräteparameterverwalter GPV zum Verwalten des mindestens einen Geräteparameters GP auf. Der Geräteparameterverwalter GPV ist der Firmware FW auf dem Steuergerät 20 hinzugefügt, insbesondere in die Firmware FW integriert.

Des Weiteren weist das System 5 eine benutzerbetätigbare Bedieneinrichtung 60 in Form eines Verwaltungs-PCs mit einer Ausgabeeinrichtung in Form einer Anzeige und einer Einstelleinrichtung beziehungsweise einer Eingabeeinrichtung in Form einer Tastatur und einer Maus zum Verwalten des mindestens einen Anwendungsparameters AP und/oder des mindestens einen Geräteparameters GP durch einen Benutzer auf.

Im gezeigten Ausführungsbeispiel ist die benutzerbetätigbare Bedieneinrichtung 60 getrennt von dem Antriebssystem 10 beziehungsweise seinem elektrischen Steuergerät 20 ausgebildet. Die Bedieneinrichtung 60 ist mit der Steuergerät 20 gekoppelt und steht mit dem Steuergerät 20 in Datenverbindung zum Austausch von Daten DA, insbesondere über eine Schnittstelle 50 des Steuergeräts 20, wie in Fig. 1 durch eine durchgezogene Linie angedeutet. Vor und/oder nach dem Verwalten braucht die Bedieneinrichtung mit dem Steuergerät nicht in Datenverbindung zu stehen. In alternativen Ausführungsbeispielen kann das Steuergerät und/oder das Antriebssystem die Bedieneinrichtung aufweisen.

Außerdem weist das Verfahren den Schritt auf: Verteilen von Daten DA von außerhalb des elektrischen Steuergeräts 20, insbesondere von der benutzerbetätigbaren Bedieneinrichtung 60, betreffend den mindestens einen Anwendungsparameter AP oder den mindestens einen Geräteparameter GP mittels eines Parameterverwalterverteilers PVV auf dem Steuergerät 20. Der Parameterverwalterverteiler PVV verteilt Daten DA betreffend den mindestens einen Geräteparameter GP an den Geräteparameterverwalter GPV und verteilt Daten DA betreffend den mindestens einen Anwendungsparameter AP an den Anwendungsparameterverwalter APV. Im Detail ist der Parameterverwalterverteiler PVV dazu ausgebildet, Daten DA betreffend den mindestens einen Geräteparameter GP an den Geräteparameterverwalter GPV zu verteilen und Daten DA betreffend den mindestens einen Anwendungsparameter AP an den Anwendungsparameterverwalter APV zu verteilen.

Wie die gezeigten und oben erläuterten Ausführungsbeispiele deutlich machen, stellt die Erfindung ein vorteilhaftes Verfahren zum Betreiben eines Anwendungsprogramms zum Ausführen auf einem elektrischen Steuergerät für ein Antriebssystem bereit, das ein Betreiben des Anwendungsprogramms erleichtert, sowie ein elektrisches Steuergerät, ein Antriebssystem mit einem solchen elektrischen Steuergerät und ein System mit einem solchen elektrischen Steuergerät und/oder einem solchen Antriebssystem.

## Patentansprüche

1. Verfahren zum Betreiben eines Anwendungsprogramms (SP) zum Ausführen auf einem elektrischen Steuergerät (20) für ein Antriebssystem (10), aufweisend den Schritt:
- Verwalten mindestens eines Anwendungsparameters (AP) mittels eines Anwendungsparameterverwalters (APV),
**dadurch gekennzeichnet,**
- **dass** das Anwendungsprogramm (SP) auf einer Firmware (FW) auf dem elektrischen Steuergerät (20) läuft, und
- **dass** der Anwendungsparameter (AP) ein Parameter des Anwendungsprogramms (SP) ist,
- wobei der Anwendungsparameterverwalter (APV) dem Anwendungsprogramm (SP) hinzugefügt ist, und
- wobei der Anwendungsparameterverwalter (APV) nicht der Firmware (FW) auf dem elektrischen Steuergerät (20) hinzugefügt ist, und
- wobei das Verfahren den Schritt aufweist:
- Verwalten mindestens eines Geräteparameters (GP) mittels eines Geräteparameterverwalters (GPV), wobei der Geräteparameterverwalter (GPV) der Firmware (FW) auf dem elektrischen Steuergerät (20) hinzugefügt ist.

2. Verfahren nach Anspruch 1, aufweisend die Schritte:
- Definieren des mindestens einen Anwendungsparameters (AP) mittels des Anwendungsprogramms (SP) und
- zur Verfügung stellen des mindestens einen definierten Anwendungsparameters (AP) an den Anwendungsparameterverwalter (APV) mittels eines Kontrollmoduls (KM), welches dem Anwendungsprogramm (SP) hinzugefügt ist.

3. Verfahren nach einem der vorhergehenden Ansprüche, aufweisend den Schritt:
- Verteilen von Daten (DA) von außerhalb des elektrischen Steuergeräts (20) betreffend den mindestens einen Anwendungsparameter (AP) oder den mindestens einen Geräteparameter (GP) mittels eines Parameterverwalterverteilers (PVV) auf dem elektrischen Steuergerät (20), wobei der Parameterverwalterverteiler (PVV) Daten (DA) betreffend den mindestens einen Geräteparameter (GP) an den Geräteparameterverwalter (GPV) verteilt und Daten (DA) betreffend den mindestens einen Anwendungsparameter (AP) an den Anwendungsparameterverwalter (APV) verteilt.

4. Verfahren nach einem der vorhergehenden Ansprüche,
- wobei das elektrische Steuergerät (20) ein Frequenzumrichter, ein Servoumrichter, ein Motion Controller oder ein Visu-Controller ist.

5. Elektrisches Steuergerät (20) für ein Antriebssystem (10), aufweisend:
- ein Anwendungsprogramm (SP) zum Ausführen auf dem elektrischen Steuergerät (20),
- wobei das elektrische Steuergerät (20) zum Ausführen des Anwendungsprogramms (SP) ausgebildet ist, und
- einen Anwendungsparameterverwalter (APV), wobei der Anwendungsparameterverwalter (APV) dazu ausgebildet ist, mindestens einen Anwendungsparameter (AP) zu verwalten,
**dadurch gekennzeichnet,**
- **dass** das Anwendungsprogramm (SP) auf einer Firmware (FW) auf dem elektrischen Steuergerät (20) läuft, und
- **dass** der Anwendungsparameter (AP) ein Parameter des Anwendungsprogramms (SP) ist,
- wobei der Anwendungsparameterverwalter (APV) dem Anwendungsprogramm (SP) hinzugefügt ist, und
- wobei der Anwendungsparameterverwalter (APV) nicht der Firmware (FW) auf dem elektrischen Steuergerät (20) hinzugefügt ist, und
- wobei das elektrische Steuergerät (20) aufweist:
- einen Geräteparameterverwalter (GPV), wobei der Geräteparameterverwalter (GPV) dazu ausgebildet ist, mindestens einen Geräteparameter (GP) zu verwalten, wobei der Geräteparameterverwalter (GPV) der Firmware (FW) auf dem elektrischen Steuergerät
- (20) hinzugefügt ist.

6. Antriebssystem (10), aufweisend:
- einen Aktor (30), insbesondere einen Elektromotor, und
- ein elektrisches Steuergerät (20) nach Anspruch 5, wobei das elektrische Steuergerät (20) zum Steuern des Aktors (30) ausgebildet ist.

7. System (5), aufweisend:
- ein elektrisches Steuergerät (20) nach Anspruch 5 oder ein Antriebssystem (10) nach Anspruch 6 und
- eine benutzerbetätigbare Bedieneinrichtung (60) eingerichtet zum Verwalten des mindestens einen Anwendungsparameters (AP) und/oder des mindestens einen Geräteparameters (GP) durch einen Benutzer.

## Claims

1. Method for operating an application program (SP) for execution on an electrical control unit (20) for a drive system (10), comprising the step of:
- managing at least one application parameter (AP) by means of an application parameter manager (APV),
**characterized**
- **in that** the application program (SP) runs on a firmware (FW) on the electrical control unit (20), and
- **in that** the application parameter (AP) is a parameter of the application program (SP),
- wherein the application parameter manager (APV) is added to the application program (SP), and
- wherein the application parameter manager (APV) is not added to the firmware (FW) on the electrical control unit (20), and
- wherein the method has the step of:
- managing at least one device parameter (GP) by means of a device parameter manager (GPV), wherein the device parameter manager (GPV) is added to the firmware (FW) on the electrical control unit (20).

2. Method according to Claim 1, having the steps of:
- defining the at least one application parameter (AP) by means of the application program (SP) and
- making the at least one defined application parameter (AP) available to the application parameter manager (APV) by means of a pilot module (KM) which is added to the application program (SP).

3. Method according to one of the preceding claims, having the step of:
- distributing data (DA) from outside the electrical control unit (20) relating to the at least one application parameter (AP) or the at least one device parameter (GP) by means of a parameter manager distributor (PVV) on the electrical control unit (20), wherein the parameter manager distributor (PVV) distributes data (DA) relating to the at least one device parameter (GP) to the device parameter manager (GPV) and distributes data (DA) relating to the at least one application parameter (AP) to the application parameter manager (APV).

4. Method according to one of the preceding claims,
- wherein the electrical control unit (20) is a frequency converter, a servo converter, a motion controller or a Visu controller.

5. Electrical control unit (20) for a drive system (10), having:
- an application program (SP) for execution on the electrical control unit (20),
- wherein the electrical control unit (20) is designed to execute the application program (SP), and
- an application parameter manager (APV), wherein the application parameter manager (APV) is designed to manage at least one application parameter (AP),
**characterized**
- **in that** the application program (SP) runs on a firmware (FW) on the electrical control unit (20), and
- **in that** the application parameter (AP) is a parameter of the application program (SP),
- wherein the application parameter manager (APV) is added to the application program (SP), and
- wherein the application parameter manager (APV) is not added to the firmware (FW) on the electrical control unit (20), and
- wherein the electrical control unit (20) has:
- a device parameter manager (GPV), wherein the device parameter manager (GPV) is designed to manage at least one device parameter (GP), wherein the device parameter manager (GPV) is added to the firmware (FW) on the electrical control unit (20).

6. Drive system (10), having:
- an actuator (30), in particular an electric motor, and
- an electrical control unit (20) according to Claim 5, wherein the electrical control unit (20) is designed to control the actuator (30).

7. System (5), having:
- an electrical control unit (20) according to Claim 5 or a drive system (10) according to Claim 6 and
- a user-operable control device (60) configured for a user to manage the at least one application parameter (AP) and/or the at least one device parameter (GP).

## Revendications

1. Procédé pour faire fonctionner un programme d'application (SP) destiné à être exécuté sur un contrôleur électrique (20) pour un système d'entraînement (10), comprenant les étapes suivantes :
- gestion d'au moins un paramètre d'application (AP) au moyen d'un gestionnaire de paramètres d'application (APV),
**caractérisé en ce que**
- le programme d'application (SP) s'exécute sur un microprogramme (FW) sur le contrôleur électrique (20), et
- le paramètre d'application (AP) est un paramètre du programme d'application (SP),
- le gestionnaire de paramètres d'application (APV) étant ajouté au programme d'application (SP), et
- le gestionnaire de paramètres d'application (APV) n'étant pas ajouté au microprogramme (FW) sur le contrôleur électrique (20), et
- le procédé comprenant l'étape suivante :
- gestion d'au moins un paramètre d'appareil (GP) au moyen d'un gestionnaire de paramètres d'appareil (GPV), le gestionnaire de paramètres d'appareil (GPV) étant ajouté au microprogramme (FW) sur le contrôleur électrique (20).

2. Procédé selon la revendication 1, comprenant les étapes suivantes :
- définition de l'au moins un paramètre d'application (AP) au moyen du programme d'application (SP) et
- mise à disposition de l'au moins un paramètre d'application (AP) défini au niveau du gestionnaire de paramètres d'application (APV) au moyen d'un module de contrôle (KM) qui est ajouté au programme d'application (SP) .

3. Procédé selon l'une des revendications précédentes, comprenant les étapes suivantes :
- distribution de données (DA) en provenance de l'extérieur du contrôleur électrique (20) concernant l'au moins un paramètre d'application (AP) ou l'au moins un paramètre d'appareil (GP) au moyen d'un distributeur de gestionnaire de paramètres (PVV) sur le contrôleur électrique (20), le distributeur de gestionnaire de paramètres (PVV) distribuant des données (DA) concernant l'au moins un paramètre d'appareil (GP) au gestionnaire de paramètres d'appareil (GPV) et des données (DA) concernant l'au moins un paramètre d'application (AP) au gestionnaire de paramètres d'application (APV).

4. Procédé selon l'une des revendications précédentes,
- le contrôleur électrique (20) étant un convertisseur de fréquence, un variateur d'asservissement, un contrôleur de mouvement ou un contrôleur visuel.

5. Contrôleur électrique (20) pour un système d'entraînement (10), comprenant :
- un programme d'application (SP) destiné à être exécuté sur un contrôleur électrique (20),
- le contrôleur électrique (20) étant configuré pour exécuter le programme d'application (SP), et
- un gestionnaire de paramètres d'application (APV), le gestionnaire de paramètres d'application (APV) étant configuré pour gérer au moins un paramètre d'application (AP),
**caractérisé en ce que**
- le programme d'application (SP) s'exécute sur un microprogramme (FW) sur le contrôleur électrique (20), et
- le paramètre d'application (AP) est un paramètre du programme d'application (SP),
- le gestionnaire de paramètres d'application (APV) étant ajouté au programme d'application (SP), et
- le gestionnaire de paramètres d'application (APV) n'étant pas ajouté au microprogramme (FW) sur le contrôleur électrique (20), et
- le contrôleur électrique (20) comprenant :
- un gestionnaire de paramètres d'appareil (GPV), le gestionnaire de paramètres d'appareil (GPV) étant configuré pour gérer au moins un paramètre d'appareil (GP), le gestionnaire de paramètres d'appareil (GPV) étant ajouté au microprogramme (FW) sur le contrôleur électrique (20).

6. Système d'entraînement (10), comprenant :
- un actionneur (30), notamment un moteur électrique, et
- un contrôleur électrique (20) selon la revendication 5, le contrôleur électrique (20) étant configuré pour commander l'actionneur (30).

7. Système (5), comprenant :
- un contrôleur électrique (20) selon la revendication 5 ou un système d'entraînement (10) selon la revendication 6 et
- un dispositif de conduite (60) actionnable par l'utilisateur, conçu pour la gestion de l'au moins un paramètre d'application (AP) et/ou de l'au moins un paramètre d'appareil (GP) par un utilisateur.
